# EUROPÄISCHE PATENTSCHRIFT

(11) **EP 4 256 934 B1**
(45) Veröffentlichungstag und Bekanntmachung des Hinweises auf die Patenterteilung: **22.07.2026**
(21) Anmeldenummer: 23166748.6
(22) Anmeldetag: 05.04.2023
(51) Int. Cl.: A01C 7/10

(54) **LANDWIRTSCHAFTLICHE AUSBRINGMASCHINE**
AGRICULTURAL APPLICATION MACHINE
MACHINE D'ÉPANDAGE AGRICOLE

(30) Priorität: 08.04.2022 DE 102022108538
(43) Veröffentlichungstag der Anmeldung: 11.10.2023
(73) Patentinhaber: PÖTTINGER Landtechnik GmbH, 4710 Grieskirchen (AT)
(72) Erfinder: RUSCH, Uwe, 4710 Grieskirchen (AT); KIRCHMAYR, Alois, 4710 Grieskirchen (AT)
(74) Vertreter: Lorenz Seidler Gossel Part. mbB

(56) Entgegenhaltungen:
- DE-A1- 102015 101 040
- DE-C- 914 912
- DE-U1- 20 109 867
- DE-U1- 29 820 684

## Beschreibung

Die vorliegende Erfindung betrifft eine landwirtschaftliche Ausbringmaschine, die als Sä- und/oder Drill- und/oder Düngerstreumaschine ausgebildet sein kann, mit einer Auffangmulde zum Auffangen des Ausbringguts in einem Probe- und/oder Anlaufbetrieb, wobei die Auffangmulde beweglich zwischen einer Auffangstellung und einer Sä- und/oder Ausbringstellung gelagert ist.

Mechanische Sä- bzw. Drillmaschinen besitzen eine Auffangmulde, um das Saatgut bzw. den Dünger, das/der im regulären Maschinenbetrieb an sich im Boden abzulegen ist, in bestimmten Betriebssituationen aufzufangen. Dies erfolgt beispielsweise in einem kurzen Probebetrieb, dem die Ausbringmaschine im Stand unterzogen wird, um zu prüfen, ob die für den Betrieb eingestellten Parameter den gewünschten Werten entsprechen. Ein solcher Probebetrieb wird bisweilen als "Abdrehen" bezeichnet. Hierfür wird das Ausbringgut nicht in den Boden eingebracht, sondern in der genannten Auffangmulde aufgefangen, um beispielsweise abgewogen zu werden. Dies erfolgt im Rahmen der Vorbereitung der mechanischen Sä- bzw. Drillmaschine für die Aussaat, was u.a. die Einstellung auf das gewünschte Saatgut, dessen Kaliber und Menge beinhaltet.

Um das abgedrehte Saatgut bzw. Düngermittel aufzufangen, wird die Auffangmulde unter das Sägehäuse gefahren, wobei gleichzeitig der Ausbringleitungshalter, der sich im regulären Sä- bzw. Ausbringbetrieb unter dem Sägehäuse befindet, weggefahren wird, sodass das abgedrehte Saatgut nicht in die Ausbringleitungen gelangt, sondern in der Auffangmulde gesammelt wird.

In ähnlicher Weise kann die genannte Auffangmulde auch in anderen Rüst- bzw. Anlaufsituationen genutzt werden, beispielsweise wenn das Saatgut gewechselt und aus dem vorherigen Säzyklus noch in der Maschine befindliches Ausbringgut entleert werden soll, ohne dies auf den Boden zu verschütten.

Um die Auffangmulde im Sä- bzw. Ausbringbetrieb Platz sparend zu verstauen und bei Bedarf in einfacher Weise in die Auffangstellung bringen zu können, kann die Auffangmulde um eine liegende Schwenkachse quer zur Fahrtrichtung verschwenkbar gelagert werden. Dabei liegt die Auffangmulde in der Auffangstellung mit nach oben offenem Querschnitt etwa unterhalb der Dosierorgane bzw. Sägehäuse, während die Auffangmulde in der inaktiven Sä- bzw. Ausbringstellung etwa um 90° nach oben geschwenkt wird, so dass die Auffangmulde etwa hochkant steht und mit ihrem offenen Querschnitt den Dosierorganen bzw. dem Sägehäuse zugewandt ist und Letzteres abdeckt, vgl. beispielsweise DE 479 542 B oder DE 914 912 B.

Um die Auffangmulde in der abgesenkten Auffangstellung tatsächlich unter den Ausläufen der Dosierorgane bzw. der Sägehäuse zu positionieren, ist es zudem bekannt, die Auffangmulde näherungsweise in Fahrtrichtung nach vorne unter die Sägehäuse zu schieben bzw. nach hinten herauszuziehen, bevor sie nach oben in die Inaktivstellung geschwenkt wird, wobei Teile der Ausbringorgane ggf. diese translatorische Schiebebewegung mitmachen können, vgl. beispielsweise DE 914 912 B oder auch DE 826 522 B, die eine Entleerungsmulde für Sämaschinen zeigt, welche mit Bodenklappen am Sägehäuse gekoppelt ist, so dass beim Öffnen der Bodenklappen die Entleerungsmulde zwangsläufig unter das Sägehäuse gezogen wird und während der Abdrehprobe bei geschlossenen Bodenklappen verschoben werden kann.

Ferner zeigt die Schrift DE 10 2015 101 040 A1 eine Sämaschine mit einer Abdrehmulde für das Auffangen des Saatguts bei der Durchführung einer Abdrehprobe, wobei die Abdrehmulde in einer Schiebeführung in Längsrichtung der Abdrehmulde unter die Dosiereinrichtung in der Sämaschine einschiebbar und herausziehbar angeordnet ist. Dabei besitzt die Abdrehmulde einen kreisförmigen Querschnitt sowie eine in Längsrichtung der Abdrehmulde verlaufende längliche Öffnung, die durch Verdrehen der Abdrehmulde um ihre Längsachse in eine Abdreh- und Nichtabdrehposition verbracht werden kann, um in der Abdrehposition Material aufnehmen zu können und in der Nichtabdrehposition kein Material in die Abdrehmulde gelangen zu lassen.

Trotz solcher Verstellmechanismen bleibt es für den Maschinenführer mühsam, die Auffangmulde gänzlich aus der Maschine herauszunehmen, beispielsweise um das in der Auffangmulde gesammelte Erntegut zurück in den Tank der Maschine zu kippen oder die Auffangmulde sauberzumachen oder das im Probedurchlauf aufgefangene Saatgut zu wiegen. Sind die Auffangmulden in der genannten Weise in Fahrtrichtung verstellbar, werden sie hierfür üblicherweise ein Stück weit nach hinten herausgezogen, um nach oben entnommen werden zu können. Das Herausnehmen und auch das Wiedereinsetzen ist dabei allerdings recht verletzungsträchtig, da mit den Händen vor den Dosierorganen gearbeitet oder sogar in die hineingegriffen wird, um die Auffangmulde besser packen und herausnehmen zu können.

Hiervon ausgehend liegt der vorliegenden Erfindung die Aufgabe zugrunde, eine verbesserte landwirtschaftliche Ausbringmaschine der genannten Art zu schaffen, die Nachteile des Standes der Technik vermeidet und Letzteren in vorteilhafter Weise weiterbildet. Insbesondere soll ein einfaches Herausnehmen und Wiedereinsetzen der Auffangmulde zum Ausleeren bzw. Säubern ermöglicht werden, ohne eine einfache Verstellung der Auffangmulde zwischen der regulären Säbetriebsstellung und der Probe- bzw. Anfahrbetriebsstellung zu opfern.

Erfindungsgemäß wird die genannte Aufgabe durch eine landwirtschaftliche Ausbringmaschine gemäß Anspruch 1 gelöst. Bevorzugte Ausgestaltungen der Erfindung sind Gegenstand der abhängigen Ansprüche.

Es wird also vorgeschlagen, die Auffangmulde seitlich quer zur Fahrtrichtung herausziehbar bzw. -schiebbar zu lagern, gleichzeitig aber schwenkbar zu lagern, um die Auffangmulde zwischen Auffangstellung und Sä- bzw. Ausbringstellung verschwenken und in verstauter Position mitführen zu können. Erfindungsgemäß ist die Auffangmulde an einer Schiebeführung seitlich quer zur Fahrtrichtung in eine Entnahmestellung herausschiebbar gelagert, wobei die Schiebeführung zusammen mit der Auffangmulde um eine liegende, quer zur Fahrtrichtung ausgerichtete Schwenkachse aus der abgesenkten Auffangstellung in die Sä- und/oder Ausbringstellung aufkippbar und zurück abkippbar ist. Die genannte Schiebeführung erfüllt dabei eine Doppelfunktion, wobei die Schiebeführung einerseits ein kontrolliertes seitliches Herausziehen bzw. -schieben der Auffangmulde in eine gut zugängliche Entnahmestellung ermöglicht und andererseits verkippbar gelagert ist, um zusammen mit der Auffangmulde aus der abgesenkten, liegenden Auffangstellung in die hochkant stehende Inaktiv- bzw. Sästellung und zurück verkippt werden zu können. Die Schiebeführung bildet insofern eine Schiebelagerung einerseits und eine Schwenklagerung andererseits.

In vorteilhafter Weiterbildung der Erfindung kann sich die genannten Schiebeführung im Wesentlichen über die gesamte Maschinenbreite erstrecken und/oder einen Schiebeführungsweg besitzen, der es gestattet, die gesamte Auffangwanne zur selben Maschinenseite seitlich herauszuschieben. Hierdurch kann eine einstückige Auffangwanne Verwendung finden und trotzdem einfach entnommen werden.

Alternativ kann die Auffangwanne aber auch in zwei, drei oder mehrere Teile unterteilt ausgebildet werden, um kleinere Teile mit weniger Gewicht einfacher handhaben zu können. Beispielsweise kann die Auffangwanne mittig geteilt sein und zwei etwa gleich große Wannenhälften umfassen.

Nichtsdestotrotz kann die Schiebeführung derart beschaffen sein, dass die mehreren Teile der Auffangwanne zu selben Maschinenseite hin herausgezogen bzw. herausgeschoben werden können. Um einen solchen Schiebevorgang zu erleichtern, können die mehreren Auffangwannenteile miteinander gekoppelt sein, beispielsweise durch formschlüssig ineinandergreifende Kupplungsmittel. Beispielsweise kann der eine Auffangwannenteil an einem stirnseitigen Ende einen Einhängeflansch umfassen, der über einen dazu passenden Endflansch am stirnseitigen Ende des anderen Auffangwannenteils eingehängt werden kann, so dass die mehreren Auffangwannenteile zusammen seitlich herausgezogen werden können, auch wenn nur eines der Wannenteile gegriffen bzw. angetrieben wird.

Nichtsdestotrotz ist es bei geteilter Ausbildung der Auffangmulde auch möglich, die Schiebeführung geteilt und/oder gegenläufig auszubilden, so dass ein Auffangmuldenteil zur linken Maschinenseite hin und ein anderer Auffangmuldenteil zur rechten Maschinenseite hin seitlich herausgeschoben werden kann.

**In** Weiterbildung der Erfindung kann die liegend quer zur Fahrtrichtung ausgerichtete Schwenkachse, um die die Auffangmulde zwischen Auffangstellung und Sä- bzw. Ausbringbetriebsstellung verschwenkt werden kann, derart angeordnet werden, dass die Auffangmulde in der inaktiven Sä- bzw. Ausbringstellung die Dosierorgane der Ausbringmaschine, insbesondere eine sich drehende Dosierwelle oder sich drehende Dosierräder oder sich bewegende Dosierhebel abdeckt und sozusagen einen Schutzschild bildet, der die potentiell verletzungsträchtigen Dosierorgane abdeckt.

**In** der genannten, inaktiven Sä- und/oder Ausbringstellung kann sich die Ausbringmulde insbesondere etwa auf Höhe der genannten Dosierorgane befinden und/oder mit dem Öffnungsquerschnitt, der in der Auffangstellung nach oben offen ist, liegend ausgerichtet bzw. den Dosierorganen zugewandt sein, so dass der Boden der Auffangmulde, der in der Auffangstellung nach unten gerichtet ist, ein aufrecht stehendes Schutzschild bildet, der sich vor den Dosierorganen erstreckt. Durch die Zuwendung des offenen Muldenquerschnitts auf die Dosierorgane hin kann die Auffangmulde in der inaktiven Sä- und/oder Ausbringstellung besonders nahe auf die Dosierorgane zu geschwenkt werden, ohne dass eine Kollision zur Auffangmulde hin entstehen würde.

Die Schiebeführung zum seitlichen Herausziehen der Auffangmulde kann verschieden beschaffen sein. Beispielsweise kann die Schiebeführung einen Schlitten umfassen, der an einer Schlittenführung liegend quer zur Fahrtrichtung verschieblich geführt ist und die Auffangmulde abstützt, so dass der Schlitten beim Herausziehen der Mulde mit der genannten Mulde mitfährt und diese abstützt. Der Schlitten kann dabei beispielsweise fest bzw. starr mit der Auffangmulde verbunden sein, beispielsweise formschlüssig verriegelt. Unabhängig hiervon kann der Schlitten an der Schlittenführung gleitgelagert oder wälzgelagert sein, um ein leichtes Herausziehen zu ermöglichen.

Alternativ oder zusätzlich zu einem solchen Schlitten kann die Schiebeführung auch ein einfaches Gleitführungsprofil umfassen, das die Auffangmulde untergreift und/oder an dem die Auffangmulde eingehängt sein kann, wobei die Auffangmulde selbst direkt auf dem Schiebeführungsprofil gleiten bzw. verschoben werden kann. Beispielsweise kann ein solches Schiebeführungsprofil selbst eine Rinnenform besitzen, in die die Auffangwanne eingesetzt sein kann. Dabei muss das Schiebeführungsprofil keine vollflächige Rinne bilden, sondern kann auch durch ein Stabprofil gebildet sein, welches als Hüllkontur eine Rinne definiert. Beispielsweise können voneinander beabstandet, näherungsweise etwa parallele Längsstreben vorgesehen sein, die sich liegend quer zur Fahrtrichtung erstrecken und auf denen die Auffangmulde abgestützt sein kann, wobei die genannten Längsstreben als Hüllkontur eine Rinne definieren können bzw. die Querschnittskontur der Auffangmulde abbilden können.

Vorzugsweise umfasst das Schiebeführungsprofil zumindest einen Bodenstützabschnitt und zwei seitliche Stützabschnitte, die zusammen einerseits den Boden der Auffangmulde und andererseits die beiden seitlichen Flanken der Auffangmulde abstützen, um insgesamt eine stabile Lagerung der Auffangmulde zu erzielen.

Um den Widerstand beim Herausziehen bzw. Zurückschieben der Auffangmulde zu reduzieren, kann das Schiebeführungsprofil ggf. mit Rollen versehen sein und/oder mit einer reibungsarmen Beschichtung versehen sein. Alternativ oder zusätzlich kann die Schiebeführung auch teleskopierbare und/oder herausziehbar gelagerte Stützstreben umfassen.

Alternativ zu einem rinnenförmigen Gleitführungsprofil kann die Schiebeführung aber auch eine einseitige Hakenschienenführung umfassen, auf der die Auffangmulde abgestützt und quer zur Fahrtrichtung verschiebbar gelagert sein kann. Die Auffangmulde kann auf einer solchen Hakenschienenführung gleitgelagert sein, wobei zum Reduzieren des Widerstands beim Herausziehen bzw. Zurückschieben der Auffangmulde aber auch eine Rollenlagerung vorgesehen sein kann und/oder eine reibungsarme Beschichtung vorgesehen sein kann.

Um die Auffangmulde einerseits in der Sä- und/oder Ausbringstellung Platz sparend zu verstauen bzw. passgenau als Schutzschild vor die Dosierorgane fahren zu können, andererseits aber in der Auffangstellung passgenau unter den Sägehäusen bzw. Dosierorganen positioniert werden zu können, kann in Weiterbildung der Erfindung vorgesehen sein, dass die genannte Schiebeführung nicht nur in der genannten Weise schwenkbar gelagert ist, sondern zusammen mit der Auffangmulde auch näherungsweise parallel zur Fahrtrichtung gegenüber dem Maschinenchassis bzw. gegenüber dem Tank für das Ausbringgut verschiebbar ist. Beispielsweise kann die Schiebeführung liegend in Fahrtrichtung vor und zurück verfahrbar gelagert sein, um in der nach unten geschwenkten Auffangstellung der Auffangmulde zusammen mit der Auffangmulde nach vorne unter die Dosierorgane bzw. Sägehäuse verfahren werden zu können und umgekehrt ein Stück weit nach hinten verfahren werden zu können, um das Aufschwenken in die Sä- bzw. Ausbringstellung zu erleichtern.

Beispielsweise kann die genannte Schiebeführung an einer Längsführung verschieblich gelagert sein und/oder mittels einer Lenkeraufhängung in der gewünschten Weise nach vorne und hinten verstellt werden zu können.

Die Verstellbarkeit der Schiebeführung liegend in Fahrtrichtung kann auch zur Einstellung verschiedener Lagerpositionen dienen, wobei solche Lagerpositionen auch Zwischenstellungen zwischen den genannten Endstellungen bilden können.

Die Erfindung wird nachfolgend anhand eines bevorzugten Ausführungsbeispiels und zugehörigen Zeichnungen näher erläutert. In den Zeichnungen zeigen:
- Fig. 1:: eine perspektivische Heckansicht einer Sä- und/oder Drillmaschine nach einer vorteilhaften Ausführung der Erfindung, die die Auffangmulde in der aufgekippten Sä- bzw. Ausbringstellung zeigt,
- Fig. 2:: eine perspektivische Ansicht der Sä- und/oder Drillmaschine ähnlich Fig. 1, wobei die Auffangmulde in der abgewippten Auffangstellung gezeigt ist,
- Fig. 3:: eine perspektivische Heckansicht der Sä- und/oder Drillmaschine ähnlich Fig. 2, wobei die Auffangmulde aus der abgewippten Auffangstellung eine Stück weit seitlich quer zur Fahrtrichtung in eine Montagestellung herausgezogen ist,
- Fig. 4:: eine ausschnittsweise Seitenansicht der Sämaschine aus den vorhergehenden Figuren, die die längsverschiebliche Lagerung der Schiebeführung und der darauf sitzenden Auffangmulde zeigt, wobei die Auffangmulde in der abgewippten Auffangstellung dargestellt ist, und
- Fig. 5:: eine ausschnittsweise Seitenansicht der Sämaschine ähnlich Fig. 4, wobei die Auffangmulde in der aufgewippten Sästellung dargestellt ist.

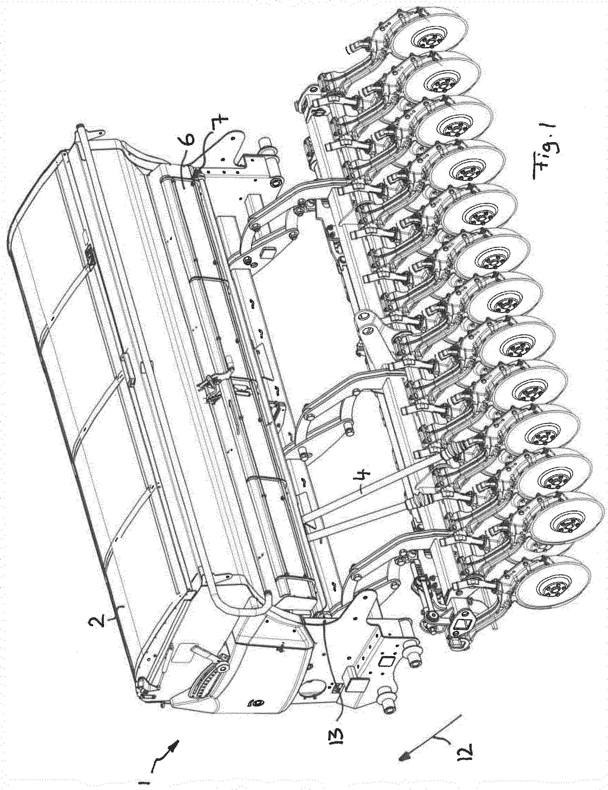

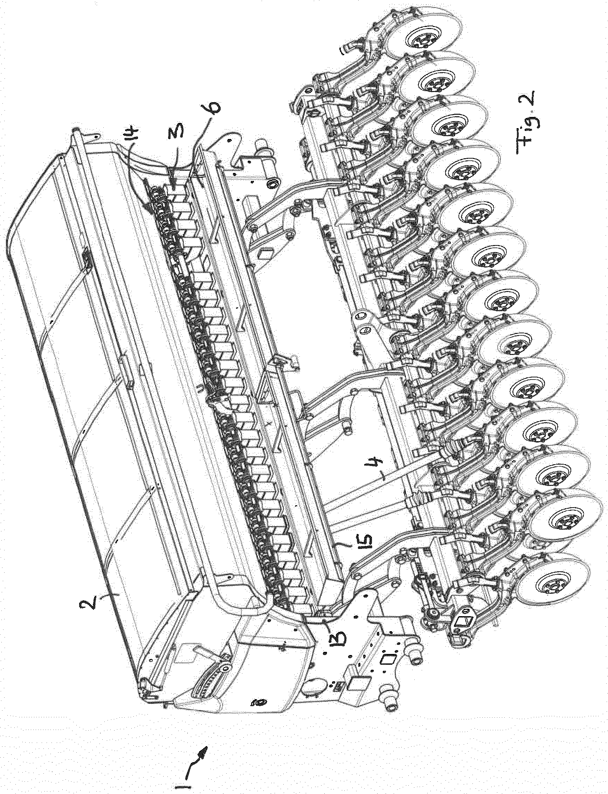

Wie die Figuren 1 und 2 zeigen, kann die Ausbringmaschine 1 als Sä- und/oder Drillmaschine ausgebildet sein, die einen Saatguttank umfassen kann, aus dem Saatgut und/oder Dünger zu einem oder mehreren Sägehäusen 3 gelangen oder gefördert werden kann, in dem/denen eine Dosiereinrichtung vorgesehen sein kann, um das Saatgut bzw. den Dünger dosiert in Ausbringleitungen 4 zu geben, über die das Saatgut bzw. der Dünger dann zu Ausbringelementen wie Säscharen transportiert und im Boden abgelegt wird.

Die genannten Ausbringleitungen 4 sind dabei an einem Ausbringleitungshalter 5 montiert, der in seiner Sä- bzw. Ausbringstellung unter dem Sägehäuse 3 positioniert ist, sodass das Saatgut bzw. der Dünger aus dem Sägehäuse 3 in die Leitungen 4 gelangen kann.

An dem genannten Ausbringleitungshalter 5 ist eine Auffangmulde 6 angekoppelt, sodass die beiden Komponenten, das heißt der Ausbringleitungshalter 5 und die Auffangmulde 6 zusammen verfahren werden können. Beispielsweise kann die Auffangmulde 6 an einem Muldenhalter 7 montiert bzw. angeordnet sein, der an dem Ausbringleitungshalter 5 befestigt sein kann, beispielsweise von dem genannten Ausbringleitungshalter 5 auskragen kann. Die Befestigung des Muldenhalters 7 kann dabei verschieden beschaffen sein, beispielsweise starr oder auch gelenkig, insbesondere derart, dass die Auffangmulde 6 relativ zum Ausbringleitungshalter 5 verschwenkt werden kann. Auch verschiebliche Lagerungen sind möglich.

Der Ausbringhalter 5 und damit auch die angekoppelte Auffangmulde 6 sind dabei relativ zu dem Sä- bzw. Ausbringgehäuse 3 verstellbar gelagert, um die genannten Komponenten aus der in Figur 1 dargestellten Sä- bzw. Ausbringstellung in die in Figur 2 dargestellte Auffangstellung und zurück verbringen zu können. In der Sä- bzw. Ausbringstellung ist der Ausbringleitungshalter 5 am bzw. unter dem Sägehäuse 3 angeordnet und diesem so zugeordnet, dass Saatgut aus dem Sägehäuse in die Ausbringleitungen gelangen kann, während die Auffangmulde 6 ein Stück weit vom Sägehäuse 3 beabstandet positioniert ist, vgl. Figur 1. Umgekehrt ist in der Auffangstellung die Auffangmulde 6 unter dem Sägehäuse 3 positioniert, während der Ausbringleitungshalter 5 ein Stück weit beabstandet positioniert ist, vgl. Figur 2.

Wie die Figuren 1 und 2 zeigen, sind der Muldenhalter 7 sowie die Ausbringmulde 6 zusammen um eine liegende, sich quer zur Fahrtrichtung erstreckende Schwenkachse 13 schwenkbar gelagert, so dass der Muldenhalter 7 zusammen mit der Auffangmulde 6 aus der in Fig. 2 gezeigten Auffangstellung um etwa 90° in die in Fig. 1 gezeigte Sä- bzw. Ausbringstellung aufgekippt werden kann. In der Auffangstellung gemäß Fig. 2 liegt die Auffangmulde 6, so dass die Auffangmulde mit ihrem offenen Querschnitt nach oben orientiert ist und abgedrehtes Saatgut von oben her in die Auffangmulde 6 fallen kann. In der aufgekippten Verstaustellung gemäß Fig. 1 steht die Auffangmulde 6 sozusagen hochkant. Genauer gesagt ist die offene Seite der Auffangmulde 6 den Dosierorganen 14 bzw. den Sägehäusen 3 zugeordnet, die sich unter dem Saatguttank 2 befinden. Hierdurch bildet die Auffangmulde 6 in der genannten Verstaustellung gemäß Fig. 1 einen Schutzschild, der die Dosierorgane 14 vor unbeabsichtigtem Hineingreifen oder auch vom Hineingelangen vor Fremdkörpern schützt.

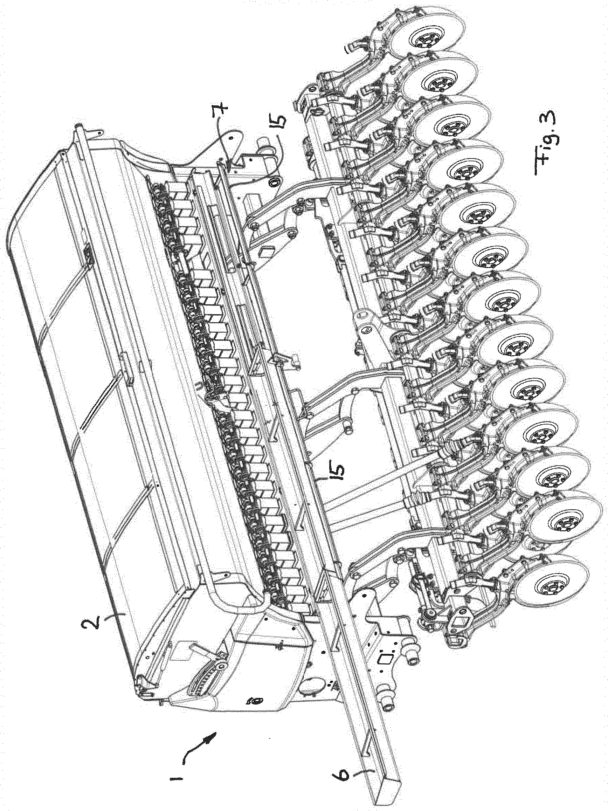

Um die Auffangmulde 6 einfach entnehmen zu können, kann der genannte Muldenhalter 7 vorteilhafterweise eine Schiebeführung 15 umfassen bzw. als Schiebeführung 15 ausgebildet sein, die dazu ausgebildet ist, die Auffangmulde 6 seitlich, d.h. liegend quer zur Fahrtrichtung nach rechts oder links herausziehen zu können, vgl. Fig. 3.

Wie die Figuren zeigen, kann die Schiebeführung 15 nach Art einer Trägerrinne ausgebildet sein, die die Auffangmulde 6 von der Unterseite her abstützt bzw. in der die Auffangmulde 6 eingelegt sein kann. Die Schiebeführung 15 gestattet es, die Auffangmulde 6 unter immer noch gegebener Abstützung auf der Schiebeführung 15 seitlich herauszuziehen, vgl. Fig. 3. Beispielsweise kann die Auffangmulde 6 auf dem Stützprofil der Schiebeführung 15 abgleiten.

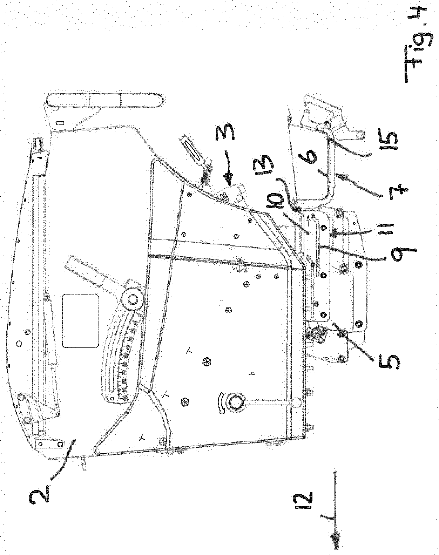

Beispielsweise kann die Schiebeführung 15 ein einfaches Gleitführungsprofil umfassen, das die Auffangmulde 6 untergreift und/oder an dem die Auffangmulde 6 eingehängt sein kann, bspw. mittels randseitiger Einhängebügel, wobei die Auffangmulde 6 selbst direkt auf dem Schiebeführungsprofil gleiten bzw. verschoben werden kann. Beispielsweise kann ein solches Schiebeführungsprofil selbst eine Rinnenform besitzen, in die die Auffangwanne 6 eingesetzt sein kann, vgl. Fig. 2 und 3. Dabei muss das Schiebeführungsprofil keine vollflächige Rinne bilden, sondern kann auch durch ein Stabprofil gebildet sein, welches als Hüllkontur eine Rinne definiert. Beispielsweise können voneinander beabstandete, näherungsweise etwa parallele Längsstreben vorgesehen sein, die sich liegend quer zur Fahrtrichtung 12 erstrecken und auf denen die Auffangmulde 6 abgestützt sein kann, wobei die genannten Längsstreben als Hüllkontur eine Rinne definieren können bzw. die Querschnittskontur der Auffangmulde 6 abbilden können, vgl Fig. 3 und Fig. 4.

Vorzugsweise umfasst das Schiebeführungsprofil zumindest einen Bodenstützabschnitt und zwei seitliche Stützabschnitte, die zusammen einerseits den Boden der Auffangmulde 6 und andererseits die beiden seitlichen Flanken der Auffangmulde 6 abstützen können, um insgesamt eine stabile Lagerung der Auffangmulde 6 zu erzielen.

Um den Widerstand beim Herausziehen bzw. Zurückschieben der Auffangmulde 6 zu reduzieren, kann das Schiebeführungsprofil ggf. mit Rollen versehen sein und/oder mit einer reibungsarmen Beschichtung versehen sein. Alternativ oder zusätzlich kann die Schiebeführung 15 auch teleskopierbare und/oder herausziehbar gelagerte Stützstreben umfassen.

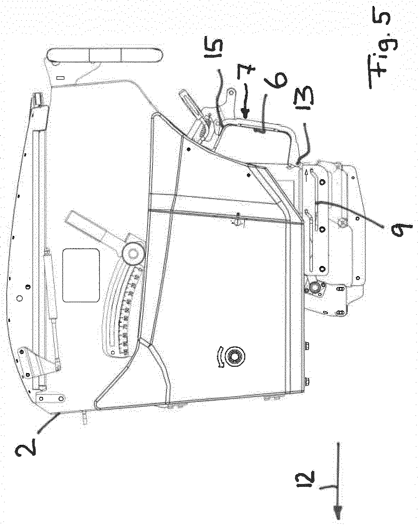

Ferner kann die Aufhängung der Ausbringmulde 6 auch noch eine Bewegung der Auffangmulde 6 in Längsrichtung der Maschine bzw. in Fahrtrichtung 12 bzw. näherungsweise in Fahrtrichtung 12 gestatten, um in der abgewippten Auffangstellung die Auffangmulde 6 ein Stück weit nach vorne unter die Sägehäuse 3 schieben zu können, vgl. Fig. 4 und 5, bzw. die Auffangmulde 6 umgekehrt ein Stück weit nach hinten schieben zu können, um dann in die Verstaustellung gemäß Fig. 1 aufgekippt werden zu können.

Die Schiebeführung 15 kann die genannte Längsverschieblichkeit mitmachen, wobei hier der Muldenhalter 7 längsverstellbar gelagert sein kann.

Die bewegliche Lagerung des Ausbringleitungshalters 5 und der daran angekoppelten Auffangmulde 6 kann dabei eine Schlittenführung 8 umfassen, die einen Verstellweg 9 für den Ausbringleitungshalter 5 und die Auffangmulde 6 vorgibt.

Die genannte Schlittenführung 8 kann dabei ein oder mehrere Führungsprofile 10 umfassen, die sich näherungsweise liegend in Fahrtrichtung erstrecken können, um den Ausbringleitungshalter 5 und die Auffangmulde 6 relativ zum Sä- bzw. Ausbringgehäuse 3 nach vorne und zurück nach hinten verstellen zu können.

An dem zumindest einen Führungsprofil 10 kann ein Schlitten 11 verschiebbar gelagert und geführt sein, an welchem der Ausbringleitungshalter 5 starr befestigt sein kann. Der genannte Schlitten 11 kann beispielsweise entlang beispielsweise schlitzförmiger Führungsbahnen an dem bzw. den Führungsprofilen 10 translatorisch verschieblich geführt sein, wobei eine Gleitlagerung oder auch eine Wälzlagerung vorgesehen sein kann. Beispielsweise kann das Führungsprofil 10 nutförmige Längsschlitze aufweisen, die den Stellweg 9 für den Schlitten 11 und damit für den Ausbringleitungshalter 5 und die Auffangmulde 6 vorgeben.

## Patentansprüche

1. Landwirtschaftliche Ausbringmaschine, insbesondere Sä- und/oder Drill- und/oder Düngerstreumaschine, mit einer Auffangmulde (6) zum Auffangen des Ausbringguts in einem Probe- und/oder Anlaufbetrieb, wobei die Auffangmulde (6) beweglich zwischen einer Auffangstellung und einer Sä- und/oder Ausbringstellung gelagert ist, wobei die Auffangmulde an einer Schiebeführung (15) seitlich quer zur Fahrtrichtung in eine Entnahmestellung herausschiebbar gelagert ist, **dadurch gekennzeichnet, dass** die Schiebeführung (15) zusammen mit der Auffangmulde (6) um eine liegende, quer zur Fahrtrichtung (12) ausgerichtete Schwenkachse (13) aus der abgesenkten Auffangstellung in die Sä- und/oder Ausbringstellung aufkippbar und zurück abkippbar ist.

2. Landwirtschaftliche Ausbringmaschine nach dem vorhergehenden Anspruch, wobei die Schiebeführung (15) sich über die im Wesentlichen gesamte Maschinenbreite erstreckt und einen Schiebeführungsweg besitzt, der es gestattet, die gesamte Auffangwanne (6) zur selben Maschinenseite seitlich herauszuschieben.

3. Landwirtschaftliche Ausbringmaschine nach einem der vorhergehenden Ansprüche, wobei die Schiebeführung (15) einen rinnenförmig konturierten Muldenhalter (7) bildet, auf dem die Auffangmulde (6) abgestützt ist und quer zur Fahrtrichtung verschiebbar gelagert, insbesondere gleitgelagert, ist.

4. Landwirtschaftliche Ausbringmaschine nach dem vorhergehenden Anspruch, wobei der rinnenförmige Muldenhalter (7) im Querschnitt betrachtet zumindest zwei gegenüberliegende, sich quer zur Fahrtrichtung erstreckende Stützabschnitte zum Abstützen seitlicher Flanken der Auffangmulde (6) und ggf. zusätzlich einen Bodenabstützabschnitt zum Abstützen des Bodens der Auffangmulde (6) aufweist.

5. Landwirtschaftliche Ausbringmaschine nach Anspruch 1 oder 2, wobei die Schiebeführung (15) eine Hakenschienenführung aufweist, auf der die Auffangmulde einseitig abgestützt und quer zur Fahrtrichtung verschiebbar gelagert, insbesondere gleitgelagert ist.

6. Landwirtschaftliche Ausbringmaschine nach einem der vorhergehenden Ansprüche, wobei die Auffangmulde (6) einstückig ausgebildet und als Ganzes seitlich auf der Schiebeführung (15) herausziehbar ist.

7. Landwirtschaftliche Ausbringmaschine nach einem der Ansprüche 1-4, wobei die Auffangmulde (6) mehrteilig ausgebildet ist und mehrere Muldenteile aufweist, die miteinander verbindbar sind derart, dass die Ausbringmulde (6) als Ganzes einschließlich aller Muldenteile zur Seite hin herausziehbar ist.

8. Landwirtschaftliche Ausbringmaschine nach dem vorhergehenden Anspruch, wobei die Muldenteile an ihren stirnseitigen, benachbarten Endabschnitten formschlüssige Verbindungsmittel zum Verbinden miteinander aufweisen.

9. Landwirtschaftliche Ausbringmaschine nach einem der vorhergehenden Ansprüche, wobei die liegend quer zur Fahrtrichtung ausgerichtete Schwenkachse (13) derart positioniert oder positionierbar ist, dass die Auffangmulde (6) in der aufgekippten Sä- und/oder Ausbringstellung Dosierorgane der Ausbringmaschine abdeckt und/oder einen Schutzschild vor den Dosierorganen der Ausbringmaschine bildet.

10. Landwirtschaftliche Ausbringmaschine nach einem der vorhergehenden Ansprüche, wobei die Schiebeführung (15) zusammen mit der Ausbringmulde (6) näherungsweise in Fahrtrichtung verstellbar gelagert sind.

11. Landwirtschaftliche Ausbringmaschine nach dem vorhergehenden Anspruch, wobei eine Schlittenführung (8) zum längsverschieblichen Lagern und/oder Einstellen verschiedener Lagerpositionen der Schiebeführung (15) zusammen mit der Auffangmulde (6) näherungsweise in Fahrtrichtung vorgesehen ist.

## Claims

1. Agricultural application machine, in particular sowing and/or seed-drill and/or fertilizer spreader machine, with a catch trough (6) for catching the application material in a test and/or start-up operation, the catch trough (6) being mounted movably between a catch position and a sowing and/or application position, the catch trough being mounted on a sliding guide (15) so as to be able to be pushed out laterally transversely to the direction of travel into a removal position, **characterized in that**
the sliding guide (15), together with the catch trough (6), is tiltable up and tiltable back down about a horizontal pivot axis (13) oriented transversely to the direction of travel (12) from the lowered catch position into the sowing and/or application position.

2. Agricultural application machine according to the preceding claim, wherein the sliding guide (15) extends over substantially the entire machine width and has a sliding-guide travel which allows the entire catch trough (6) to be pushed out laterally toward the same machine side.

3. Agricultural application machine according to one of the preceding claims, wherein the sliding guide (15) forms a trough holder (7) contoured in trough-shaped fashion, on which the catch trough (6) is supported and mounted displaceably transversely to the direction of travel, in particular mounted as a sliding bearing.

4. Agricultural application machine according to the preceding claim, wherein the trough-shaped trough holder (7), viewed in cross-section, has at least two opposite support sections extending transversely to the direction of travel for supporting lateral flanks of the catch trough (6) and optionally additionally a bottom support section for supporting the bottom of the catch trough (6).

5. Agricultural application machine according to claim 1 or 2, wherein the sliding guide (15) has a hook-rail guide, on which the catch trough is supported on one side and mounted displaceably transversely to the direction of travel, in particular mounted as a sliding bearing.

6. Agricultural application machine according to one of the preceding claims, wherein the catch trough (6) is designed in one piece and can be pulled out laterally on the sliding guide (15) as a whole.

7. Agricultural application machine according to one of claims 1 to 4, wherein the catch trough (6) is designed in multiple parts and has several trough parts which can be connected to one another in such a way that the catch trough (6) as a whole, including all trough parts, can be pulled out toward the side.

8. Agricultural application machine according to the preceding claim, wherein the trough parts have form-locking connecting means on their front-side adjacent end sections for connecting them to one another.

9. Agricultural application machine according to one of the preceding claims, wherein the horizontal pivot axis (13) oriented transversely to the direction of travel is positioned or can be positioned in such a way that the catch trough (6), in the tilted-up sowing and/or application position, covers metering elements of the application machine and/or forms a protective shield in front of the metering elements of the application machine.

10. Agricultural application machine according to one of the preceding claims, wherein the sliding guide (15), together with the catch trough (6), is mounted adjustably approximately in the direction of travel.

11. Agricultural application machine according to the preceding claim, wherein a carriage guide (8) is provided for longitudinally displaceable mounting and/or setting of different mounting positions of the sliding guide (15) together with the catch trough (6) approximately in the direction of travel.

## Revendications

1. Machine agricole de distribution, en particulier semoir et/ou semoir en lignes et/ou épandeur d'engrais, comprenant un bac de collecte (6) destiné à collecter le produit à distribuer lors d'un fonctionnement d'essai et/ou de démarrage, le bac de collecte (6) étant monté mobile entre une position de collecte et une position de semis et/ou de distribution, le bac de collecte étant monté sur un guidage coulissant (15) de manière à pouvoir être sorti latéralement transversalement à la direction de déplacement dans une position de prélèvement,
**caractérisée en ce que**
le guidage coulissant (15), conjointement avec le bac de collecte (6), peut être basculé vers le haut autour d'un axe de pivotement (13) horizontal, orienté transversalement à la direction de déplacement (12), depuis la position de collecte abaissée jusque dans la position de semis et/ou de distribution, et peut être rebasculé vers le bas.

2. Machine agricole de distribution selon la revendication précédente, dans laquelle le guidage coulissant (15) s'étend sur sensiblement toute la largeur de la machine et possède une course de guidage coulissant qui permet de faire sortir latéralement l'ensemble du bac de collecte (6) du même côté de la machine.

3. Machine agricole de distribution selon l'une des revendications précédentes, dans laquelle le guidage coulissant (15) forme un support de bac (7) profilé en forme de rigole, sur lequel le bac de collecte (6) est supporté et monté de manière déplaçable transversalement à la direction de déplacement, en particulier monté à glissement.

4. Machine agricole de distribution selon la revendication précédente, dans laquelle le support de bac (7) en forme de rigole présente, vu en section transversale, au moins deux sections d'appui opposées, s'étendant transversalement à la direction de déplacement, destinées à soutenir des flancs latéraux du bac de collecte (6), et le cas échéant en outre une section d'appui de fond destinée à soutenir le fond du bac de collecte (6).

5. Machine agricole de distribution selon la revendication 1 ou 2, dans laquelle le guidage coulissant (15) présente un guidage à rail à crochet, sur lequel le bac de collecte est supporté d'un seul côté et monté de manière déplaçable transversalement à la direction de déplacement, en particulier monté à glissement.

6. Machine agricole de distribution selon l'une des revendications précédentes, dans laquelle le bac de collecte (6) est réalisé d'une seule pièce et peut être extrait latéralement dans son ensemble sur le guidage coulissant (15).

7. Machine agricole de distribution selon l'une des revendications 1 à 4, dans laquelle le bac de collecte (6) est réalisé en plusieurs parties et présente plusieurs parties de bac qui peuvent être reliées les unes aux autres de telle sorte que le bac de collecte (6), dans son ensemble, y compris toutes les parties de bac, peut être extrait vers le côté.

8. Machine agricole de distribution selon la revendication précédente, dans laquelle les parties de bac présentent, au niveau de leurs sections d'extrémité frontales voisines, des moyens de liaison à engagement de forme destinés à les relier entre elles.

9. Machine agricole de distribution selon l'une des revendications précédentes, dans laquelle l'axe de pivotement (13), orienté horizontalement et transversalement à la direction de déplacement, est positionné ou peut être positionné de telle sorte que le bac de collecte (6), dans la position de semis et/ou de distribution basculée vers le haut, recouvre des organes de dosage de la machine de distribution et/ou forme un écran de protection devant les organes de dosage de la machine de distribution.

10. Machine agricole de distribution selon l'une des revendications précédentes, dans laquelle le guidage coulissant (15), conjointement avec le bac de collecte (6), est monté de manière réglable approximativement dans la direction de déplacement.

11. Machine agricole de distribution selon la revendication précédente, dans laquelle un guidage à coulisseau (8) est prévu pour le montage déplaçable longitudinalement et/ou le réglage de différentes positions de montage du guidage coulissant (15), conjointement avec le bac de collecte (6), approximativement dans la direction de déplacement.
